# EUROPEAN PATENT SPECIFICATION

(11) **EP 2 998 059 B1**
(45) Date of publication and mention of the grant of the patent: **15.01.2020**
(21) Application number: 15185168.0
(22) Date of filing: 15.09.2015
(51) Int. Cl.: B22F 3/105, B22D 23/00, B33Y 30/00, B33Y 10/00, B22F 3/00

(54) **METHOD FOR THE THREE-DIMENSIONAL PRINTING OF AN ITEM MADE OF METALLIC MATERIAL AND APPARATUS FOR PERFORMING THE METHOD**
VERFAHREN ZUM DREIDIMENSIONALEN DRUCKEN VON EINES ARTIKELS AUS METALLISCHEM WERKSTOFF UND VORRICHTUNG ZUR DURCHFÜHRUNG DES VERFAHRENS
PROCÉDÉ POUR L'IMPRESSION EN TROIS DIMENSIONS D'UN ARTICLE CONSTITUÉ D'UN MATÉRIAU MÉTALLIQUE ET APPAREIL POUR METTRE EN OEUVRE LE PROCÉDÉ

(30) Priority: 17.09.2014 IT PD20140236
(43) Date of publication of application: 23.03.2016
(73) Proprietor: IMR Engineering & Technologies S.R.L., 34076 Romans d'Isonzo (GO) (IT)
(72) Inventor: GIOLO, Fabio, 33050 Bagnaria Arsa UD (IT); MIANI, Fabio, 33100 Udine (IT)
(74) Representative: Modiano, Micaela Nadia

(56) References cited:
- EP-A1- 2 676 784
- WO-A1-2014/094882
- US-A- 6 113 696
- US-A- 6 143 378
- US-A1- 2013 197 683

## Description

The present invention relates to a method for the three-dimensional printing of an item made of metallic material and to an apparatus for performing the method.

Currently the production of metallic objects and prototypes in low volumes and with complex shapes is the exclusive domain of additive technologies of selective laser sintering, selective laser melting and electron beam melting.

These technologies have in common the use of an energy beam (laser or electrons) that acts selectively on a plane on which metallic powder has been distributed uniformly, heating localized regions to such temperatures as to cause its melting and/or its sintering.

They allow to provide metallic items having particular geometries, with arbitrary shape and full density, in particular by laser melting; however, they are not devoid of drawbacks, the foremost being the high cost of the apparatuses, which is a very strong limitation to the use of these technologies in the field of metals.

Other known drawbacks of the cited technologies are high energy consumptions, the laser spot that is reduced in order to increase power, the very long deposition times (typically 50 g/hour are reached). These drawbacks limit the field of application, which is restricted to the prototype production of components with characteristics that other technologies are unable to meet, such as for example molds with integrated cooling channels or biomedical prostheses, avionics parts, automotive parts with extremely high performance and special alloys or composites obtained by sintering and melting powders.

Furthermore, technologies based on laser use have limitations due to the fact that: bringing the material to the melting point with the laser causes a substantial energy expenditure; the laser melts the material completely and therefore it is necessary to control the dendritic structure of the part and its mechanical characteristics; it is not possible to modulate the dimensions of the spot of the laser according to the requirements and therefore a minimum spot is normally used in order to achieve the best results in terms of roughness, but consequently with long times and therefore also high costs.

Usually, as is known, complete melting of the metallic material and subsequent solidification entail, due to shrinkage phenomena, the development of defects such as porosities, segregations and inclusions.

For the reasons described above and as anticipated, the cited technologies lend themselves to the production of typically unit batches and only in specific cases are they extended to a few units.

In the field of the production of prototype models, fused deposition modeling, an additive manufacturing technology commonly used for modeling waxes and thermoplastic materials to provide prototype models and articles, is also widespread. It is also known in the production of metallic objects. A plastic filament or metallic filament is liquefied inside a melting chamber to be then deposited on a plane by an extrusion nozzle that controls its flow. The nozzle is moved along the three axes by a numeric control mechanism. Examples of this technology can be found in US6143378, US2013/0197683 A1 and EP2676784 A1.

Differently from the preceding ones, this technology has higher production capacities but it, also, is not devoid of drawbacks.

Articles manufactured with this technology are useful from the aesthetic standpoint but have a low or extremely low mechanical strength, since they are made of plastic material or by melting metallic material.

US 6 113 696 A discloses a system for forming a three-dimensional object by filament deposition of forming materials, including a crucible for holding a reservoir of the filament forming material, an orifice disposed in the bottom of the crucible through which the forming material passes to form a flow of material filaments, and a flow control apparatus for controlling and selectively depositing the flow of material filaments on the substrate exclusively where required to form the three-dimensional object.

US 6 143 378 A discloses a process for additive manufacture by energetic wire deposition, wherein a source wire is fed into an energy beam generated melt-pool on a growth surface as the melt-pool moves over the growth surface, for enabling a rapid prototyping and manufacture of fully dense, near-net shape components, as well as cladding and welding processes.

The aim of the present invention is to devise a method for providing items made of metallic material, for example prototypes and components for applications with high performance, at drastically lower costs than currently known metal prototyping technologies and with higher productivity levels.

Within this aim, an object of the invention is to devise an apparatus for performing the method described above.

Another object of the invention is to devise a method that can be applied to a range of products that is currently restricted, by using the cited technologies, to batches of one unit or a few units.

A further object of the invention is to devise a method and an apparatus for manufacturing items made of metallic material with a structure characterized by limited segregations and controlled microstructure, with the possibility to achieve static and dynamic mechanical characteristics that are greater than those obtainable by means of the previously cited technologies.

This aim, as well as these and other objects that will become better apparent hereinafter, are achieved by an apparatus and a method for the three-dimensional printing of an item made of metallic material, according to the invention, comprising the features and the steps of claims 1 and 11, respectively.

Further characteristics and advantages of the invention will become better apparent from the description of a preferred but not exclusive embodiment of the method according to the invention and from the description of a preferred but not exclusive embodiment of the apparatus according to the invention, illustrated by way of nonlimiting example in the accompanying drawings, wherein:
Figure 1 and Figure 2 are sectional views of an apparatus according to the invention during two successive steps of its operation;
Figure 3 is an enlarged-scale sectional view of a portion of the apparatus according to the invention;
Figure 4 is a perspective view of the apparatus according to the invention;
Figure 5 is an enlarged-scale perspective view of a portion of an apparatus according to the invention in a possible constructive variation;
Figure 6 is another enlarged-scale perspective view of the portion shown in Figure 5.

With reference to the figures, the apparatus according to the invention, by means of which it is possible to perform the method, also according to the invention, is designated generally by the reference numeral 10.

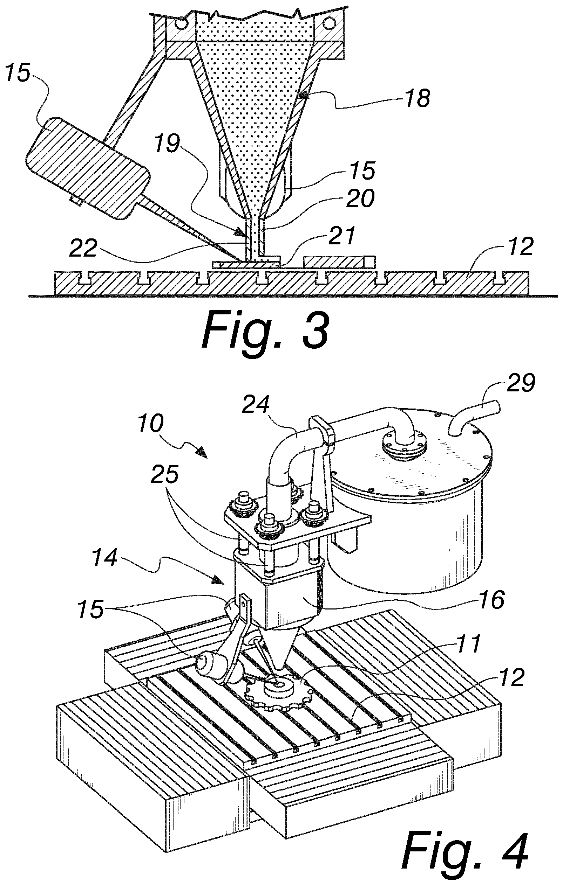

The method requires first of all the generation of a virtual model of the item 11, developing a 3-D drawing with appropriate software (the item 11 to be provided is clearly visible in Figure 4 and consists, in this illustrated example, of a mechanical component).

Filaments of semisolid metallic material in the thixotropic state are deposited sequentially in layers on a worktable 12 so as to progressively reproduce the previously developed virtual model. Conveniently, the worktable 12 is of the type that can be moved along three axes in space and can also be rotated about the vertical axis.

The deposition of an upper layer of material is performed progressively along a locally preheated track of the lower layer. This preheating occurs by using at least one laser, two in the illustrated example, acting along perpendicular directions and to be activated selectively as a function of the filament deposition direction.

Deposition occurs by extrusion of the metallic material in the thixotropic state and conveniently dosed and pressurized.

The apparatus 10 by means of which the method is performed comprises a crucible 13, shown in cross-section in the first two figures, that contains metallic material in the semisolid state and supplies a head 14 for the deposition in layers of filaments of the same metallic material on the worktable 12.

The deposition head 14 is provided with means 15 for localized preheating along a track of a lower layer of deposited semisolid metallic material, onto which a filament of an upper layer must be deposited.

The preheating means 15 consist of two laser emitters installed preferably along perpendicular directions.

As clearly visible in the first two figures, the deposition head 14 comprises a hollow body 16 within which there is a piston 17 that is adapted to push the semisolid metallic material outside an extrusion nozzle 18, which preferably has a rectangular output cross-section and can be replaced with other nozzles of the same type but with an output cross-section that has a greater or smaller width.

The extrusion nozzle 18 can be rotated about its own substantially vertical longitudinal axis, remaining always tangent to the profile to be obtained during extrusion.

Furthermore, the output cross-section of the extrusion nozzle can be different from the rectangular one, depending on the shape and dimensions that one wishes to give to the filament of metallic material in output.

Figure 3 shows an enlarged-scale sectional view in which it is possible to notice that the extrusion nozzle 18, with rectangular output cross-section, has an end portion 19 with a first wall 20, the one arranged on the opposite side with respect to the advancement direction of the extrusion nozzle 18, that is raised from the substrate 12 of metallic material by a height that is equal to the thickness of the layer, and therefore of the filament, to be deposited. The other walls 22 of the extrusion nozzle 18 instead substantially reach the substrate 21 in order to contain the material of the filament during deposition.

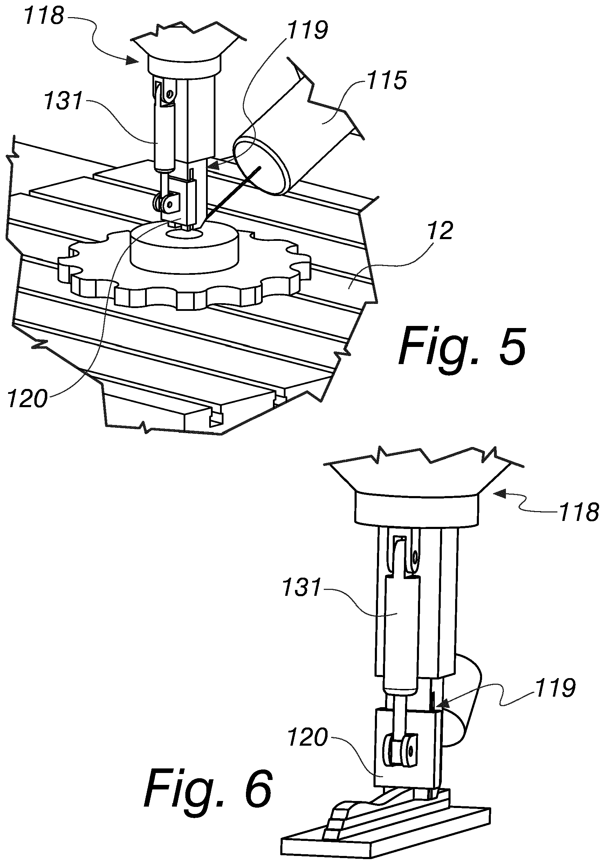

Figures 5 and 6 show an enlarged-scale view of a variation of an extrusion nozzle 118 with which the preheating means 115, constituted here by a laser emitter, are associated.

According to this variation, the extrusion nozzle 118 has an end portion 119 which, on the opposite side with respect to the advancement direction of the extrusion nozzle 118 with respect to the underlying worktable 12, has a first wall 120 that can translate in a vertical direction and is guided by appropriate translation means 131, which in the illustrated example consist of an actuator.

In this manner, the first wall 120 can be raised and lowered so as to ensure a distance from the already deposited metallic material with a height that is equal to the thickness of the layer, and therefore of the filament, to be deposited.

In this case also, the other walls 122 contain the material of the filament during deposition.

The above cited laser emitters are integral with the hollow body 16, being installed on its external wall.

Again by viewing the first two figures, it can be noticed that the hollow body 16 is supplied with the semisolid metallic material by means of a supply portion 23 that comprises the crucible 13, already cited previously, and a duct 24 that connects it integrally to the piston 17.

The duct 24 is connected to the end of the piston 17 and such piston is conveniently hollow axially for the passage of the material to the hollow body 16 and advantageously can translate with the supply portion 23, being integral therewith.

The supply portion 23 is moved along a substantially vertical direction by way of adapted translation means, not shown, and along four guiding columns 25, more clearly visible in the perspective view of Figure 4.

The deposition head 14 is instead fixed and the worktable 12 can be moved in space below it.

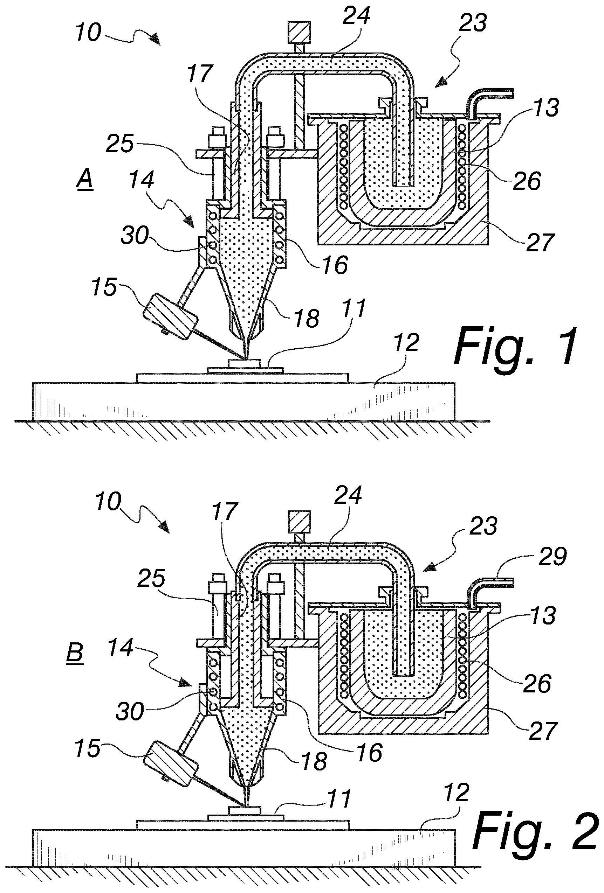

Moreover, Figures 1 and 2 show an electric resistor 26 that winds around the crucible 13 and is adapted to keep the temperature of the metallic material contained therein in the semisolid state. The electric resistor 26 is interposed between the crucible 13 and a boxlike body 27 provided with a lid 28.

At the lid 28, the apparatus 10 is provided with a connection 29 to a pressurization device.

The apparatus 10 is also provided with an electric winding 30, inside the wall of the hollow body 16, and is crossed by a current for heating the metallic material to be pushed into the extrusion nozzle 18.

Conveniently, at the hollow body 16 there can be helical ducts, not shown, that are crossed by a cooling liquid.

The apparatus 10 is also provided with means for controlling the operating conditions, not shown for the sake of simplicity, for acquisition of the environmental parameters and for determining in real time the process parameters required to obtain an article according to the required mechanical and quality characteristics. In particular, the temperature of the substrate 21 can be acquired by means of a pyrometer and used to adjust the addition of heat required to reach an ideal working condition.

Use of the apparatus in performing the method according to the invention is as follows.

First of all, the virtual model that reproduces the item 11 is created.

By means of an assisted design system, composed of CAPP software for planning the production process and of CAM software for computer aided manufacturing, a processing strategy is devised: for example, the spatial orientation of the item 11 to be provided and the process parameters, such as deposition rate, deposition paths, preheating of the substrate, are established as a function of the particular type of material used.

The worktable 12 is arranged below the deposition head 14.

Reference is made to the first configuration A of the apparatus 10 shown in Figure 1.

The piston 17 is arranged at the beginning of the stroke within the hollow body 16, which is filled with metallic material in the semisolid state, supplied by the crucible 13, with the aid of pressurization, which also prevents the material from flowing back along the duct 24 in the opposite direction, i.e., toward the crucible 13.

The movement means translate the supply portion 23, guided by the guiding columns 25, which, being integrally connected to the piston 17, produces its translation within the hollow body 16 to the stroke limit, as shown in the second configuration B of Figure 2.

During translation, the piston 17 pushes the metallic material outside the extrusion nozzle 18 and simultaneously the worktable 12 is moved below the deposition head 14, along the preset track that must reproduce faithfully a first layer, which is lower than its placement in space, of the virtual model. The movement of the worktable 12 is combined with the movement of the extrusion nozzle 18 if the nozzle can be rotated.

In case of bends of the item 11, the extrusion nozzle 18 is always kept tangent to the profile to be obtained.

Conveniently, first the external contour of the item 11 is provided and then the internal space is filled, optionally with nozzles having a larger output cross-section.

At the end of the production of the first layer, which constitutes the substrate 21 onto which the upper layer is to be extruded, the worktable 12 is made to translate downwardly by a height that is equal to the height of the thickness of the upper layer to be additionally provided. Optionally, for variable thicknesses as in the example shown in Figure 6, it is convenient to use the extrusion nozzle variation 118, of which it is possible to modify, during extrusion, the height of the first wall 120 by controlling the actuator.

The preheating means 15 are activated and strike, with a laser beam, in a localized manner with a spot, the surface of the substrate 21, where the metallic material must be deposited immediately. Heating allows the adhesion of the deposited filament on the substrate 21.

The localized preheating means 15, being installed on the external wall of the hollow body 16, remain fixed in space with the rest of the deposition head 14, preceding the extrusion nozzle 18 (or 118) in the path determined by the motion of the underlying worktable 12, along the track preset by the work program.

The filament that exits from the extrusion nozzle 18 (or 118) advantageously has a rectangular cross-section; in this manner the formation of gaps between superimposed filaments is substantially avoided.

Furthermore, the presence of the walls 22 of the end portion 19 of the extrusion nozzle 18 allows to prevent the metallic material from overflowing during extrusion, ensuring precise execution. This result is achieved also by using the extrusion nozzle variation 118.

The massive part of the component is conveniently provided by means of an extrusion nozzle 18 that has an output cross-section, at the end portion 19, that is wider, so as to work with an output flow width that is preferably on the order of a millimeter, while the outermost layers of the item 11 are provided by using an extrusion nozzle 18 with a narrower output cross-section, so as to work with an output flow width on the order of one tenth of a millimeter, in order to obtain a more precise deposition of the material and reduce the surface roughness of the item to the values required by the particular application.

The superimposition of layers by extrusion of filaments is repeated until the reproduction of the virtual model ends, obtaining the desired item 11.

During the deposition of the filaments of material, the hollow body 16 is filled several times. In the second configuration B, when the piston 17 has reached the end of its stroke, the supply portion 23 is made to translate upwardly, causing the rise of the piston 17, and the hollow body 16 is filled again, supplied by the crucible 13.

The electric resistor 26 that wraps around the crucible 13 maintains the temperature of the metallic material contained therein, ensuring that it remains in the semisolid state, and also acts as an electromagnetic stirrer, so that a globular structure of such material is also ensured.

Furthermore, the electric winding 30 can heat, if necessary, the material already transferred to the hollow body 16 so that it is extruded at the same temperature that it had in the crucible 13.

The latter, further, allows by induction to cause the material that is present in the extrusion nozzle 18 to descent and also to make it rise in order to interrupt deposition. This use can be utilized also to perform bends during deposition or discontinuous portions. For example, it is possible to interrupt the extrusion of material from the extrusion nozzle 18, the worktable 12 is made to rotate below the deposition head 14 and extrusion is then resumed along a different direction.

The technology described with the method according to the invention, using the apparatus 10, utilizes the characteristics of a semisolid metallic material in the thixotropic state to manufacture items 11 with limited segregations and controlled globular microstructure, with the possibility to achieve static and dynamic mechanical characteristics that are superior to those currently obtainable with production technologies that entail melting the metallic material.

Thanks to the conditions of the deposited material, the laser emitter does not have to fuse the material of the substrate 21 but only has to preheat the track followed by the extrusion nozzle 18. The material therefore remains in the semisolid state and ensures a high-strength globular structure.

Furthermore, the fact that the laser does not fuse the substrate completely allows to contain the energy expenditure and reduce production times, with the consequent possibility to increase the productivity level.

The method according to the invention can be used for various applications, such as for example: rapid prototyping with materials, alloys and mechanical characteristics that conform to the final product; finished products for small batches with low production costs and products for which just-in-time production is required; products for immediate marketing, avoiding the step of industrialization, particularly in the case of new products for which industrial production would require considerable resources and high costs that would not be justifiable, especially for molds and machining; products having complex shapes and/or undercut constraints.

In practice it has been found that the invention achieves the intended aim and objects, by providing a method for three-dimensional printing of an item made of metallic material and an apparatus for performing it by way of which it is possible to provide prototypes and components for applications with high performance, and products having a complex shape, with drastically reduced costs with respect to currently known metal prototyping technologies, with higher productivity levels and also in shorter times.

It is in fact possible to manufacture prototypes to be used in the final steps of testing, with mechanical characteristics similar to those of the final product, avoiding the use of prototypes made of plastic material or low-strength alloys.

Another advantage resides in that if modifications to the shape and structure of the item are required, they can be performed substantially in real time simply by modifying the 3-D drawing.

The invention thus conceived is susceptible of numerous modifications and variations, all of which are within the scope of the appended claims.

In practice, the materials used, so long as they are compatible with the specific use, as well as the contingent shapes and dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus for the three-dimensional printing of an item (11) made of a metallic material , comprising a crucible (13) that contains metallic material in the semisolid state that supplies a head (14) comprising an extrusion nozzle (18, 118) for the deposition in layers of filaments of said metallic material in the semisolid state on a worktable (12), at least one of said deposition head (14) and said worktable (12) being movable in space with respect to the other,
the apparatus being **characterized in that** said deposition head (14) comprises a hollow body (16) inside which there is a piston (17) that is adapted to push said metallic material in the semisolid state out of the extrusion nozzle (18, 118), said hollow body (16) being supplied with metallic material in the semisolid state by means of a supply portion (23) that comprises said crucible (13) and a duct (24) that connects the supply portion (23) integrally to said piston (17) and is hollow axially for the passage of said material to said hollow body (16) and can translate with said supply portion (23), and **in that** it is provided with preheating means (15) for localized preheating along a track of a lower layer of said deposited metallic material on which a filament of an upper layer must be deposited.

2. The apparatus according to claim 1, **characterized in that** said extrusion nozzle (18, 118) has a rectangular output cross-section.

3. The apparatus according to claim 1, **characterized in that** said extrusion nozzle (18) can be replaced with a similar nozzle that has an output cross-section with different dimensions.

4. The apparatus according to claim 2 , **characterized in that** said extrusion nozzle (118) has an end portion (119) which, on the opposite side with respect to the advancement direction of said extrusion nozzle (118) with respect to said worktable (12), has a first wall (120) that can translate in a vertical direction and is guided by adapted translation means (131).

5. The apparatus according to claim 1, **characterized in that** said preheating means (15) comprise at least one laser emitter that is integral with said hollow body (16).

6. The apparatus according to claim 1, **characterized in that** said preheating means comprise two laser emitters (15) installed preferably and acting along perpendicular directions and activatable selectively as a function of the filament deposition direction.

7. The apparatus according to claim 1, **characterized in that** it comprises an electric resistor (26) that wraps around said crucible (13).

8. The apparatus according to claim 1, **characterized in that** the wall of said hollow body (16) contains a heating electric winding (30).

9. The apparatus according to claim 1, **characterized in that** said worktable (12) can move along three axes in space and can rotate about the vertical axis.

10. The apparatus according to claim 1, **characterized in that** said extrusion nozzle (18) can rotate about its own substantially vertical longitudinal axis.

11. A method for the three-dimensional printing of an item (11) made of metallic material by way of the apparatus of claim 1, comprising the steps of:
- generating a virtual model of the item (11) to be manufactured,
- depositing in layers, on a worktable (12), filaments of metallic material in the semisolid state, so as to reproduce said virtual model,
wherein the deposition of an upper layer is performed progressively along a locally preheated track of a lower layer (21).

12. The method according to claim 11, **characterized in that** the preheating along said track is performed by laser emission.

## Patentansprüche

1. Eine Vorrichtung zum dreidimensionalen Drucken eines Artikels (11) aus einem metallischen Werkstoff, die einen Schmelztiegel (13) umfasst, der metallischen Werkstoff im halbfesten Zustand enthält, der einen Kopf (14) versorgt, der eine Extrusionsdüse (18, 118) für das schichtweise Auftragen von Fasern des metallischen Werkstoffs im halbfesten Zustand auf einen Werktisch (12) umfasst; wobei der Auftragskopf (14) und/oder der Werktisch (12) im Verhältnis zueinander im Raum beweglich sind,
wobei die Vorrichtung **dadurch gekennzeichnet ist, dass** der Auftragskopf (14) einen Hohlkörper (16) umfasst, in dem sich ein Kolben (17) befindet, der ausgebildet ist, um den metallischen Werkstoff im halbfesten Zustand aus der Extrusionsdüse (18, 118) zu drücken, wobei der Hohlkörper (16) mit metallischem Werkstoff im halbfesten Zustand durch einen Versorgungsabschnitt (23) versorgt wird, welcher den Schmelztiegel (13) umfasst und eine Leitung (24), die den Versorgungsabschnitt (23) integral mit dem Kolben (17) verbindet und axial hohl ist für den Durchlauf des Materials zu dem Hohlkörper (16) und mit dem Versorgungsabschnitt (23) eine Translationsbewegung durchführen kann, und dadurch, dass sie mit Vorerhitzungsmitteln (15) zur lokalen Vorerhitzung entlang einer Spur einer unteren Schicht des aufgetragenen metallischen Werkstoffs ausgestattet ist, auf welche eine Faser einer oberen Schicht aufgetragen werden muss.

2. Die Vorrichtung gemäß Anspruch 1, **dadurch gekennzeichnet, dass** die Extrusionsdüse (18, 118) einen rechteckigen Ausgangsquerschnitt hat.

3. Die Vorrichtung gemäß Anspruch 1, **dadurch gekennzeichnet, dass** die Extrusionsdüse (18) durch eine ähnliche Düse ersetzt werden kann, die einen Ausgangsquerschnitt mit anderen Maßen hat.

4. Die Vorrichtung gemäß Anspruch 2, **dadurch gekennzeichnet, dass** die Extrusionsdüse (118) einen Endabschnitt (119) hat, welcher auf der Seite, die der Vorschubrichtung der Extrusionsdüse (118) mit Bezug auf den Werktisch (12) entgegengesetzt ist, eine erste Wand (120) hat, die eine Translationsbewegung in eine vertikale Richtung durchführen kann und von geeigneten Translationsmitteln (131) geführt ist.

5. Die Vorrichtung gemäß Anspruch 1, **dadurch gekennzeichnet, dass** die Vorerhitzungsmittel (15) mindestens einen Laseremitter umfassen, der integral mit dem Hohlkörper (16) ist.

6. Die Vorrichtung gemäß Anspruch 1, **dadurch gekennzeichnet, dass** die Vorerhitzungsmittel zwei Laseremitter (15) umfassen, die vorzugsweise in senkrechten Richtungen installiert sind und wirken und selektiv in Abhängigkeit von der Faserauftragsrichtung aktivierbar sind.

7. Die Vorrichtung gemäß Anspruch 1, **dadurch gekennzeichnet, dass** sie einen elektrischen Widerstand (26) umfasst, der den Schmelztiegel (13) umgibt.

8. Die Vorrichtung gemäß Anspruch 1, **dadurch gekennzeichnet, dass** die Wand des Hohlkörpers (16) eine elektrische Heizspule (30) enthält.

9. Die Vorrichtung gemäß Anspruch 1, **dadurch gekennzeichnet, dass** der Werktisch (12) sich entlang dreier Achsen im Raum bewegen und um die vertikale Achse drehen kann.

10. Die Vorrichtung gemäß Anspruch 1, **dadurch gekennzeichnet, dass** die Extrusionsdüse (18) sich um ihre eigene im Wesentlichen vertikale Längsachse drehen kann.

11. Ein Verfahren zum dreidimensionalen Drucken eines Artikels (11) aus metallischem Werkstoff mit Hilfe der Vorrichtung gemäß Anspruch 1, das folgende Schritte umfasst:
- das Herstellen eines virtuellen Modells des zu produzierenden Artikels (11),
- das schichtweise Auftragen von Fasern aus metallischem Werkstoff im halbfesten Zustand auf einen Werktisch (12), um das virtuelle Modell zu reproduzieren,
wobei das Auftragen einer oberen Schicht nach und nach entlang einer lokal vorerhitzten Spur einer unteren Schicht (21) durchgeführt wird.

12. Das Verfahren gemäß Anspruch 11, **dadurch gekennzeichnet, dass** die Vorerhitzung entlang der Spur durch Laseremission durchgeführt wird.

## Revendications

1. Appareil pour l'impression tridimensionnelle d'un article (11) constitué d'une matière métallique, comportant un creuset (13) qui contient la matière métallique à l'état semi-solide qui alimente une tête (14) comportant une buse d'extrusion (18, 118) pour le dépôt en couches de filaments de ladite matière métallique à l'état semi-solide sur une table de travail (12), au moins un élément parmi ladite tête de dépôt (14) et ladite table de travail (12) étant mobile dans l'espace par rapport à l'autre,
l'appareil étant **caractérisé en ce que** ladite tête de dépôt (14) comporte un corps creux (16) à l'intérieur duquel il existe un piston (17) qui est adapté pour pousser ladite matière métallique à l'état semi-solide en dehors de la buse d'extrusion (18, 118), ledit corps creux (16) étant alimenté en matière métallique à l'état semi-solide au moyen d'une partie d'alimentation (23) qui comporte ledit creuset (13) et un conduit (24) qui relie la partie d'alimentation (23) d'un seul tenant audit piston (17) et est axialement creux pour le passage de ladite matière jusqu'audit corps creux (16) et peut se déplacer en translation avec ladite partie d'alimentation (23), et **en ce qu'**il est pourvu de moyens de préchauffage (15) pour un préchauffage localisé le long d'une piste d'une couche inférieure de ladite matière métallique déposée sur laquelle un filament d'une couche supérieure doit être déposé.

2. Appareil selon la revendication 1, **caractérisé en ce que** ladite buse d'extrusion (18, 118) a une section transversale de sortie rectangulaire.

3. Appareil selon la revendication 1, **caractérisé en ce que** ladite buse d'extrusion (18) peut être remplacée par une buse similaire qui a une section transversale de sortie ayant des dimensions différentes.

4. Appareil selon la revendication 2, **caractérisé en ce que** ladite buse d'extrusion (118) a une partie d'extrémité (119) qui, sur le côté opposé par rapport à la direction d'avance de ladite buse d'extrusion (118) par rapport à ladite table de travail (12), a une première paroi (120) qui peut se déplacer en translation dans une direction verticale et est guidée par des moyens de translation (131) adaptés.

5. Appareil selon la revendication 1, **caractérisé en ce que** lesdits moyens de préchauffage (15) comportent au moins un émetteur laser qui est solidaire dudit corps creux (16).

6. Appareil selon la revendication 1, **caractérisé en ce que** lesdits moyens de préchauffage comportent deux émetteurs laser (15) installés de préférence et agissant le long de directions perpendiculaires et sélectivement activables en fonction de la direction de dépôt des filaments.

7. Appareil selon la revendication 1, **caractérisé en ce qu'**il comporte une résistance électrique (26) qui s'enroule autour dudit creuset (13).

8. Appareil selon la revendication 1, **caractérisé en ce que** la paroi dudit corps creux (16) contient un enroulement électrique de chauffage (30).

9. Appareil selon la revendication 1, **caractérisé en ce que** ladite table de travail (12) peut se déplacer le long de trois axes dans l'espace et peut tourner autour de l'axe vertical.

10. Appareil selon la revendication 1, **caractérisé en ce que** ladite buse d'extrusion (18) peut tourner autour de son propre axe longitudinal sensiblement vertical.

11. Procédé pour l'impression tridimensionnelle d'un article (11) en matière métallique au moyen de l'appareil de la revendication 1, comportant les étapes consistant à :
- générer un modèle virtuel de l'article (11) à fabriquer,
- déposer en couches, sur une table de travail (12), des filaments de matière métallique à l'état semi-solide, de manière à reproduire ledit modèle virtuel,
dans lequel le dépôt d'une couche supérieure est réalisé progressivement le long d'une piste localement préchauffée d'une couche inférieure (21).

12. Procédé selon la revendication 11, **caractérisé en ce que** le préchauffage le long de ladite piste est réalisé par émission laser.
